(19) Europäisches Patentamt
European Patent Office
Office européen des brevets

(11) **EP 1 802 716 B1**

(12) **EUROPÄISCHE PATENTSCHRIFT**

(45) Veröffentlichungstag und Bekanntmachung des Hinweises auf die Patenterteilung:
**17.06.2009 Patentblatt 2009/25**

(21) Anmeldenummer: 05789691.2

(22) Anmeldetag: **08.10.2005**

(51) Int Cl.:
*C09D 143/00* (2006.01)      *C09D 143/04* (2006.01)

(86) Internationale Anmeldenummer:
**PCT/EP2005/010867**

(87) Internationale Veröffentlichungsnummer:
**WO 2006/042658 (27.04.2006 Gazette 2006/17)**

(54) **HOCHKRATZFESTE UND HOCHELASTISCHE BESCHICHTUNGSMITTEL AUF BASIS VON ALKOXYSILANEN**

EXTREMELY SCRATCH-RESISTANT, HIGHLY ELASTIC COATING AGENTS BASED ON ALKOXYSILANES

AGENTS DE REVETEMENT TRES RESISTANTS AUX ERAFLURES ET TRES ELASTIQUES A BASE D'ALCOXYSILANES

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **19.10.2004 DE 102004050748**

(43) Veröffentlichungstag der Anmeldung:
**04.07.2007 Patentblatt 2007/27**

(73) Patentinhaber: **BASF Coatings AG
48165 Münster (DE)**

(72) Erfinder:
• **POPPE, Andreas
48324 Sendenhorst (DE)**
• **KLEIN, Günter
48165 Münster (DE)**
• **KUTSCHERA, Michael
67117 Limburgerhof (DE)**

(74) Vertreter: **Leifert & Steffan
Patentanwälte
Postfach 10 40 09
40031 Düsseldorf (DE)**

(56) Entgegenhaltungen:
**US-A- 4 499 150**

## Beschreibung

Die vorliegende Erfindung betrifft ein mehrstufiges Berechichtügsverfahren unter Einsatz thermisch härtbarer Beschichtungsmittel mit hoher Kratzfestigkeit und hoher Gummielastizität auf Basis aprotischer Lösemittel sowie auf Basis von Alkoxysilanen, welche insbesondere als Topcoats, vorzugsweise Klarlacke, für die OEM-Serienlackierung geeignet sind.

Beschichtungsmittel enthaltend Bindemittel auf der Basis von Poly(meth)-acrylaten, die laterale und/oder terminale Alkoxysilangruppen aufweisen, sind beispielsweise aus den Patenten bzw. Patentanmeldungen US-A-4,043,953, US-A-4,499,150, US-A-4,499,151, EP-A-0 549 643 und WO-A-92/20643 bekannt Die dort beschriebenen Poly(meth) acrylate können bis zu 70 Ges.-% Comonomere mit Alkoxysilangruppen, bezogen auf alle eingesetzten Comonomere, enthalten. Die Beschichtungsmittel werden unter Katalyse von Lewis-Säuren und gegebenenfalls in Anwesenheit von geringen Mengen Wasser unter Ausbildung von Si-O-Si-Netzwerken ausgehärtet Die Beschichtungsmittel werden unter anderem als Klarlacke in OEM-Aufbauten eingesetzt Obwohl solche Klarlacke schon eine hohe Kratzfestigkeit und eine vergleichsweise gute Witterungsbeständigkeit aufweisen, haben sie Defizite bei der Elastizität, die eine Anwendung als hochbeanspruchbare OEM-Klarlacke erschweren.

In EP-A-0 267 698 werden lösemittelhaltige Beschichtungsmittel beschrieben, welche als Bindemittelbestandteile (1) vernetzbare Addukte mit Alkoxysilangruppen, erhältlich durch sukzessive Umsetzung von Polyisocyanaten mit Hydroxyalkyl(meth)acrylaten (Michael-Reaktion) und danach mit Aminoalkylalkoxysilanen, und (2) Poly(meth)acrylate, die laterale und/oder terminale Alkoxysilangruppen aufweisen, enthalten. Die bei der Michael-Reaktion gebildeten gut zugänglichen Amingruppen in den Addukten führen zu einer Reduktion der Wasserbeständigkeit der ausgehärteten Beschichtungen. Weiterhin können diese Amingruppen im Härtungsprozeß durch Reaktion mit den -Si(O-Alkyl)3-Gruppen Si-N-C-Netzpunkte bilden, welche hydrolyselabil sind und zu einer reduzierten Chemikalienbeständigkeit der resultierenden Beschichtung führen. Auch solche Beschichtungsmittel haben Defizite bei der Elastizität.

US-A-4,598,131 beschreibt lösemittelhaltige Beschichtungsmittel enthaltend vernetzbare Addukte mit Alkoxysilangruppen, erhältlich durch sukzessive Umsetzung von Tetraalkylorthosilicat mit Aminoalkoholen und danach mit Polyisocyanaten. Solche Addukte weisen synthesebedingt unerwünschte Si-O-C- bzw. Si-N-C-Netzpunkte auf, welche hydrolyselabil sind und zu einer reduzierten Chemikalienbeständigkeit der resultierenden Beschichtung führen. Weiterhin haben auch solche Beschichtungsmittel Defizite bei der Gummielastizität.

In EP-A-0 571 073 werden lösemittelhaltige Beschichtungsmittel beschrieben, welche als Bindemittelbestandteile (1) vernetzbare Addukte aus Polyisocyanaten mit mehr als einer tertiären Isocyanatgruppe und Aminoalkylalkoxysilanen und (2) Poly(meth)acrylate, die laterale und/oder terminale Alkoxysilangruppen aufweisen, enthalten. Die resultierenden Beschichtungen weisen zwar eine vergleichsweise hohe Kratzfestigkeit auf, die Gummielastizität der Beschichtung ist, insbesondere bei hochbeanspruchten Anwendungen, noch nicht ausreichend.

DE-A-102 37 270 umfaßt Beschichtungsmittel enthaltend vernetzbare Addukte aus Isocyanatomethylalkoxysilanen und Polyolen. Die bei der Synthese eingesetzten Isocyanatomethylalkoxysilane sind hochtoxisch und damit in üblichen Produktionsverfahren nur bedingt einsetzbar. Auch diese Beschichtungsmittel weisen insbesondere bei der Anwendung als Automobilklarlack noch Defizite in den Oberflächeneigenschaften, insbesondere nach Belastungen, wie beispielsweise Waschvorgängen, auf. Weiterhin besteht hinsichtlich der Elastizität, im Sinne der Gummielastizität, der mit solchen Beschichtungsmitteln hergestellten Beschichtungen Optimierungsbedarf.

## Aufgabe und Lösung

Aufgabe der vorliegenden Erfindung war es, ein Beschichtungsverfahren vorzugsweise für hochbeanspruchbare OEM-Klarlacke, zur Verfügung zu stellen, durch das Beschichtungen erhalten werden können, welche insbesondere nicht die Defizite in der Gummielastizität der Beschichtungen des Standes der Technik aufweisen. Weiterhin war es Aufgabe der Erfindung, Beschichtungen bereitzustellen, die den hohen Anforderungen hinsichtlich der Kratzfestigkeit, der Chemikalienbeständigkeit und der Witterungsstabilität, wie sie bei OEM-Klarlacken vorliegen, gerecht werden. Die Beschichtungen sollten hochgradig kratzfest sein und insbesondere einen hohen Glanzerhalt nach Kratzbelastung aufweisen. Insbesondere sollten sich die Beschichtungen und Lackierungen, speziell die Klarlackierungen, auch in Schichtdicken > 40 $\mu$m herstellen lassen, ohne daß Spannungsrisse auftreten. Dies ist eine wesentliche Voraussetzung für die Verwendung der Beschichtungen und Lackierungen, insbesondere der Klarlackierungen, in dem technologisch und ästhetisch besonders anspruchsvollen Gebiet der Automobilserienlackierung (OEM). Dabei müssen sie vor allem eine besonders hohe Waschstraßenbeständigkeit aufweisen, die sich in dem für die Praxis relevanten AMTEC-Waschstraßentest durch einen Restglanz (20 °) nach Reinigung nach DIN 67530 > 70% des Ausgangsglanzes bemerkbar macht.

Darüber hinaus sollen die Beschichtungsmittel einfach und sehr gut reproduzierbar herstellbar sein und keine ökologischen Probleme während der Lackapplikation bereiten.

Demgemäß wurde das neue mehrstufige Beschichtungsverfahren gefunden, dadurch gekennzeichnet, dass auf ein gegebenenfalls vorbeschichtetes Substrat eine pigmentierte Basislackschicht und danach eine Schicht aus einem Beschichtungsmittel aufgebracht wird, das enthält

(A) mindestens 70 Gew.-% bezogen auf den Gehalt an nichtflüchtigen Substanzen im Beschichtungsmittel einer Verbindung (A1'), die ein Addukt aus Polyisocyanat und Alkoxysilan umfasst, wobei (A1') mindestens eine reaktive Gruppe der Formel I enthält:

- NR-C(O)-N-(X-SiR''x(OR')3-x)n(X'-SiR''y(OR')3-y)m(R''')o (I)

mit

R = Wasserstoff, Alkyl, Cycloalkyl, Aryl oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, R' = Wasserstoff, Alkyl oder Cycloalkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl,

X = linearer und/oder verzweigter Alkylen- oder Cycloalkylenrest mit 2 bis 20 Kohlenstoffatomen,

R'' = Alkyl, Cycloalkyl, Aryl oder Aralkyl, wobei die Kohlenstoffkette durch nicht benachbarte Sauerstoff-, Schwefel- oder NRa-Gruppen unterbrochen sein kann,

X' = linearer und/oder verzweigter Alkylen- oder Cycloalkylenrest mit 2 bis 20 Kohlenstoffatomen,

R''' = Alkyl, Cycloalkyl, Aryl oder Aralkyl, wobei die Kohlenstoffkette durch nicht benachbarte Sauerstoff-, Schwefel- oder NRa-Gruppen unterbrochen sein kann,

n = 0 bis 2,

m = 0 bis 2,

o = 0 oder 1,

m+n+o = 2,

x = 0 bis 2, sowie

y = 0 bis 2,

(B) einen Katalysator für die Vernetzung der -Si(OR')3-x-Einheiten, und

(C) ein aprotisches Lösemittel oder ein Gemisch von aprotischen Lösemitteln.

Bei der Härtung der Beschichtungsmittel werden die reaktiven Gruppen (1) solchermaßen vernetzt, dass bei der Nanoidentation-Prüfung an der ausgehärteten Schicht folgende Eigenschaften resultieren:

(a) elastische Volumenerholung > 88,5%, bevorzugt > 88%, besonders bevorzugt > 89.5%, insbesondere > 91 %

(b) plastische Verformung < 3,5%, bevorzugt < 3%, besonders bevorzugt < 2,5%, insbesondere < 2%

(c) brüchige Verformung < 10,0%, bevorzugt < 9%, besonders bevorzugt < 8°%, insbesondere < 7%.

Im Hinblick auf den Stand der Technik war es überraschend und für den Fachmann nicht vorhersehbar, dass die Aufgaben, die der vorliegenden Erfindung zugrunde lagen, mit Hilfe des erfindungsgemäßen Beschichtungsverfahrens gelöst werden konnten.

Die im erfindungsgemäßen Verfahren eingesetzte Komponente (A) kann besonders einfach hergestellt werden und bereitet bei der Lackapplikation keine signifikanten toxikologischen und ökologischen Probleme.

Die im erfindungsgemäßen Verfahren eingesetzten Beschichtungsmittel sind sehr gut reproduzierbar herstellbar und konnten bei der Verwendung in flüssigem Zustand auf Festkörpergehalte > 40 Gew.-%, bevorzugt > 45 Gew. %, insbesondere > 50 Gew.-%, eingestellt werden, ohne dass dadurch ihre sehr gute Transportfähigkeit, Lagerstabilität und Verarbeitbarkeit, insbesondere ihre Applizierbarkeit, in Mitleidenschaft gezogen werden.

Das erfindungsgemäße Beschichtungsverfahren liefert neue Beschichtungen und Lackierungen, speziell Klarlackierungen, die hochkratzfest und hochelastisch sind. Die Chemikalienbeständigkeit der Beschichtungen ist ausgezeichnet Weiterhin lassen sich die nach dem erfindungsgemäßen Verfahren hergestellten Beschichtungen und Lackierungen, speziell die Klarlackierungen, auch in Schichtdicken > 40 $\mu$m herstellen, ohne daß Spannungsrisse auftreten. Deswegen können die nach dem erfindungsgemäßen Verfahren hergestellten Beschichtungen und Lackierungen, insbesondere die Klarlackierungen, in dem technologisch und ästhetisch besonders anspruchsvollen Geblet der Automobilserienlakkierung (OEM) eingesetzt werden. Dabei zeichnen sie sich insbesondere durch eine besonders hohe Waschstraßenbeständigkeit und Kratzfestigkeit aus, was anhand des für die Praxis relevanten AMTEC-Waschstraßentests durch einen Restglanz (20 °) nach der Reinigung nach DIN 67530 > 70% des Ausgangsglanzes untermauert werden kann.

**Beschreibung der Erfindung**

Die Komponente (A) des Beschichtungsmittels

Die im erfindungsgemäßen Verfahren eingesetzte Komponente (A) mindestens 70 Gew.-%, bezogen auf den Gehalt an nichtflüchtigen Substanzen im Beschichtungsmittel, einer Verbindung (A1') mit mindestens einer reaktiven Gruppe der Formel I

-NR-C(O)-N-(X-SiR"x(OR')3-x)n(X'-SiR"y(OR')3-y)m(R''')o (I)

mit

R = Wasserstoff, Alkyl, Cycloalkyl, Aryl oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl,

R' = Wasserstoff, Alkyl, oder Cycloalkyl, wobei die Kohlenstoffkette durch nicht benachbarte Sauerstoff-, Schwefel- oder NRa-Gruppen unterbrochen sein kann, wobei R' bevorzugt Wasserstoff und/oder Alkyl mit 1 bis 6 Kohlenstoffatomen, besonderes bevorzugt Methyl und/oder Ethyl ist,

X,X' = linearer und/oder verzweigter Alkylen oder Cycloalkylenrest mit 2 bis 20 Kohlenstoffatomen, wobei X,X' bevorzugt Alkylen mit 2 bis 6 Kohlenstoffatomen, besonders bevorzugt Alkylen mit 2 bis 4 Kohlenstoffatomen sind,

R" = Alkyl, Cycloalkyl, Aryl oder Aralkyl, wobei die Kohlenstoffkette durch nicht benachbarte Sauerstoff-, Schwefel- oder NRa-Gruppen unterbrochen sein kann, wobei R" bevorzugt Alkyl mit 1 bis 6 Kohlenstoffatomen, besonderes bevorzugt Methyl und/oder Ethyl ist,

R''' = Alkyl, Cycloalkyl, Aryl oder Aralkyl, wobei die Kohlenstoffkette durch nicht benachbarte Sauerstoff-, Schwefel- oder NRa-Gruppen unterbrochen sein kann, wobei R''' bevorzugt Alkyl mit 1 bis 6 Kohlenstoffatomen, besonderes bevorzugt Alkyl mit 1 bis 4 Kohlenstoffatomen ist,

n = 0 bis 2, bevorzugt n =1 oder 2,

m = 0 bis 2, bevorzugt m = 1 oder 2,

o = 0 oder 1, bevorzugt o = O,

m+n+o = 2 ,

bevorzugt m+n = 2, sowie

x,y = 0 bis 2, bevorzugt x = O.

Vorzugsweise wird die Komponente (A1') mit den reaktiven Gruppen der Formel I durch Umsetzung von mindestens einem Di- und/oder Polyisocyanaten (PI) mit mindestens einem Aminosilan der Formel III hergestellt:

HN-(X-SiR"x(OR')3-x)n(X'-SiR"y(OR')3-y)m(R''')o (III),

wobei die Substituenten und Indices wie obenstehend definiert sind.

Besonders bevorzugte Aminosilane (III) sind N-Methyl-2-aminoethyltrimethoxysilan, N-Methyl-3-aminopropyl-trimethoxysilan, N-Methyl-4-aminobutyl-trimethoxysilan, N-Methyl-2-aminoethyl-triethoxysilan, N-Methyl-3-aminopropyl-trieth oxysilan, N-Methyl-4-aminobutyltriethoxysilan, die N-Ethyl-, N-Propyl- und N-Butylderivate der vorgenannten Verbindungen, sowie insbesondere Bis(2-ethyltrimethoxysilyl)amin, Bis(3-propyltrimethoxysilyl)amin, Bis(4-butyltrimethoxysilyl)amin, Bis(2-ethyltriethoxysilyl)amin, Bis(3-proyltrimethoxysilyl)amin und/oder Bis(4-butyltriethoxysilyl)amin. Ganz besonders bevorzugt ist zur weiteren Erhöhung der Netzwerkdichte Bis(3-propyltrimethoxysilyl)amin.

Solche Aminosilane sind beispielsweise unter dem Markennamen DY-NASILAN ® der Fa. DEGUSSA bzw. Silquest ® der Fa. OSI verfügbar.

Als Di- und/oder Polyisocyanate PI für die Herstellung der Komponente (A1') sind an sich bekannte substituierte oder unsubstituierte aromatische, aliphatische, cycloaliphatische und/oder heterocyclische Polyisocyanate bevorzugt Beispiele für bevorzugte Polyisocyanate sind: 2,4-Toluoldiisocyanat, 2,6-Toluoldiisocyanat, Diphenylmethan-4,4'-diisocyanat, Diphenylmethan-2,4'-diisocyanat, p-Phenylendiisocyanat, Biphenyldiisocyanate, 3,3'-Dimethyl-4,4'-diphenylendiisocyanat, Tetramethylen-1,4-diisocyanat Hexamethylen-1,6-diisocyanat, 2,2,4-Trimethylhexane-1,6-diisocyanat, Isophorondiisocyanat, Ethylendiisocyanat, 1,12-Dodecandiisocyanat, Cyclobutan-1,3-diisocyanat, Cyclohexan-1,3-diisocyanat, Cyclohexan-1,4-diisocyanat, Methylcyclohexyldiisocyanate, Hexahydrotoluol-2,4-diisocyanat, Hexahydrotoluol-2,6-diisocyanat, Hexahydrophenylen-1,3-diisocyanat, Hexahydrophenylen-1,4-diisocyanat, Perhydrodiphenylmethan-2,4'-diisocyanat, 4,4'-Methylendicyclohexyldiisocyanat (z.B. Desmodur ® W der Fa Bayer AG), Tetramethylxylyldiisocyanate (z.B. TMXDI ® der Fa. American Cyanamid) und Mischungen der vorgenannten Polyisocyanate. Weiterhin bevorzugte Polyisocyanate sind die Biuret-Dimere und die Isocyanurat-Trimere der vorgenannten Diisocyanate.

Besonders bevorzugte Polyisocyanate PI sind Hexamethylen-1,6-diisocyanat, Isophorondiisocyanat und 4,4'-Methylendicyclohexyldiisocyanat, deren Biuret-Dimere und/oder Isocyanurat-Trimere.

In einer weiteren Ausführungsform der Erfindung sind die Polyisocyanate PI Polyisocyanat-Präpolymerisate mit Urethan-Struktureinheiten, welche durch Umsetzung von Polyolen mit einem stöchiometrischen Überschuß an vorgenannten Polyisocyanaten erhalten werden. Solche Polyisocyanat-Präpolymere sind beispielsweise in US-A-4,598,131 beschrieben.

Ganz besonders bevorzugte Komponenten (A1') sind: Umsetzungsprodukte von Hexamethylen-1,6-diisocyanat und Isophorondiisocyanat, und/oder deren Isocyanurat-Trimere mit N-Methyl-3-aminopropyltrimethoxysilan und/oder insbesondere Bis(3-propyltrimethoxysilyl)amin.

Die Umsetzung der Polyisocyanate mit den Aminosilanen erfolgt vorzugsweise in Inertgasatmosphäre bei Temperaturen von maximal 100 °C, bevorzugt von maximal 60 °C.

Die resultierende Komponente (A1') weist erfindungsgemäß mindestens eine Struktureinheit der vorgenannten Formel (I) auf, gemäß der erfindungsgemäß bevorzugten Herstellungsmethode sind bevorzugt mindestens 90 mol-% der Isocyanatgruppen des Polyisocyanats PI mit den Aminosilanen (III), besonders bevorzugt mindestens 95 mol-%, zu Strukureinheiten (I) umgesetzt.

Der Anteil der Komponente (A1') an dem in dem erfindungsgemäßen Verfahren eingesetzten Beschichtungsmittel beträgt mindestens 70 Gew.-%, bezogen auf den Gehalt an nichtflüchtigen Substanzen im Beschichtungsmittel, bevorzugt mindestens 80 Gew.%.

**Die weiteren Komponenten des Beschichtungsmittels**

Als Katalysatoren (B) für die Vernetzung der -Si(OR')3-x(y)-Einheiten können an sich bekannte Verbindungen eingesetzt werden. Beispiele sind Lewis-Säuren (Elektronenmangelverbindungen), wie beispielsweise Zinnnaphtenat, Zinnbenzoat, Zinnoctoat, Zinnbutryrat, Dibutylzinndilaurat, Dibutylzinndiacetat, Dibutylzinnoxid, Bleioctoat.

Als Katalysatoren werden bevorzugt Metallkomplexe mit Chelatliganden verwendet. Bei den Chelatliganden bildenden Verbindungen handelt es sich um organische Verbindungen mit mindestens zwei funktionellen Gruppen, die an Metallatome oder -ionen koordinieren können. Üblicherweise handelt es sich bei diesen funktionellen Gruppen um Elektronendonatoren, welche Elektronen an Metallatome oder -ionen als Elektronenakzeptoren abgeben. Es sind grundsätzlich alle organischen Verbildungen der genannten Art geeignet, solange sie nicht die Vernetzung der im erfindunsgemäßen Verfähren eingeseteten härtbaren Massen zu gehäteterfindungsgemäßen Verfahren eingesetzten Massen nachteilig beeinflussen oder gar völlig verhindern. Es können beispielsweise die Aluminium- und Zirkon-Chelatkomplexe, wie sie beispielsweise in dem amerikanischen Patent US 4,772,672 A, Spalte 8, Zeile 1, bis Spalte 9, Zeile 49, beschrieben werden, als Katalysatoren verwendet werden. Besonders bevorzugt sind Aluminium-, Zirkon-, Titan- und/oder Bor-Chelate, wie beispielsweise Aluminiumethylacetoacetat und/oder Zirkonethylacetoacetat

Weiterhin besonders bevorzugt sind sind Aluminium-, Zirkon-, Titan- und/oder Bor- Alkoholate und/oder -Ester.

Desweiteren besonders bevorzugt als Komponente (B) sind Nanopartikel. Solche Nanopartikel werden bevorzugt zumindestens teilweise bei der Vernetzung der -Si(OR')3-x(y)-Einheiten in die Netzpunkte miteingebaut.

Vorzugsweise werden die Nanopartikel aus der Gruppe, bestehend aus Metallen und Verbindungen von Metallen, vorzugsweise Verbindungen von Metallen, ausgewählt.

Vorzugsweise werden die Metalle aus der dritten und vierten HauptGruppe, der dritten bis sechsten sowie der ersten und zweiten Nebengruppe des Periode nsystems der Elemente sowie den Lanthaniden, und bevorzugt aus der Gruppe, bestehend aus Bor, Aluminium, Gallium, Silizium, Germanium, Zinn, Zink, Titan, Zirkon, Hafnium, Vanadium, Niob, Tantal, Molybdän, Wolfram und Cer, ausgewählt. Insbesondere werden Aluminium, Silizium , Titan und/oder Zirkon verwendet.

Vorzugsweise handelt es sich bei den Verbindungen der Metalle um Oxide, Oxidhydrate, Sulfate, Hydroxide oder Phosphate, insbesondere Oxide, Oxidhydrate und Hydroxide. Ganz besonders bevorzugt sind Böhmit-Nanopartikal.

Vorzugsweise weisen die Nanopartikel eine Primärpartikelgröße <50, bevorzugt 5 bis 50, insbesondere 5 bis 30 nm auf.

Die Katalaysatorkomponente (B) wird vorzugsweise in Anteilen von 0,01 bis 30 Ges.-%, besonders bevorzugt in Anteilen von 0,1 bis 20 Gew.-%. bezogen auf die nicht flüchtigen Bestandteile des im erfindungsgemäßen Verfahren eingesetzten Beschichtungsmittels, eingesetzt.

Als weitere Komponente (C) sind aprotische Lösemittel geeignet, die im Beschichtungsmittel chemisch inert gegenüber den Komponenten (A) und (B) sind und die auch bei der Härtung des Beschichtungsmittels nicht mit (A) und (B) reagieren. Beispiele für solche Lösemittel sind aliphatische und/oder aromatische Kohlenwasserstoffe wie Toluol, Xylol, Solventnaphtha, Solvesso 100 oder Hydrosol ® (Fa. ARAL), Ketone, wie Aceton, Methylethylketon oder Methylamylketon, Ester, wie Ethylacetat , Butylacetat, Pentylacetat oder Ethylethoxypropionat, Ether oder Mischungen aus den vorgenannten Lösemitteln. Bevorzugt weisen die Lösemittel oder Lösemitteigemische einen Wassergehalt von maximal 1 Gew.%, besonders bevorzugt maximal 0,5 Gew.-%, bezogen auf das Lösemittel auf. In einer bevorzugten Ausführungsform der Erfindung wird zunächst eine Mischung der Komponenten (A) und (C) hergestellt welche in einem weiteren Schritt mit den übrigen Komponenten des im erfindungsgemäßen Verfähren eingesetzten Beschichtungsmittels gemischt wird. In einer weiteren Ausführungsform der Erfindung werden als Komponente (D) weitere Bindemittel eingesetzt, welche mit den Si(OR)3-Gruppen der Komponente (A) und/oder mit sich selbst , gegebenenfalls unter Katalyse der Komponente (B), Netzwerkpunkte ausbilden können.

Beispielsweise können als Komponente (D) weitere Oligomerisate oder Polymerisate mit Si(O-Alkyl)3-Gruppen eingesetzt werden, wie z.B. die in den schon genannten Patent(anmeldung)en US-A-4,499,150, US-A-4,499,151 oder EP-A-0 571 073 genannten Poly(meth)acrylate. Allerdings werden solche Komponenten (D) nur in solchen Mengen eingesetzt, daß die hohe Witterungsstabilität der ausgehärteten Beschichtung erhalten bleibt. In der Regel werden solche Poly(meth)acrylate mit - Si(O-Alkyl)3-Gruppen in Anteilen von bis zu 40 Gew.-%, bevorzugt von bis zu 30 Gew.-%, besonders bevorzugt von bis zu 25 Gew.%, bezogen auf die nichtflüchtigen Bestandteile des Beschichtungsmittels, eingesetzt.

Bevorzugt als Komponente (D) sind Aminoplastharze und/oder Epoxyharze, verwendbar. Es kommen die üblichen und bekannten Aminoplastharze in Betracht, deren Methylol- und/oder Methoxymethylgruppen z. T. mittels Carbamat- oder Allophanatgruppen defunktionalisiert sein können. Vernetzungsmittel dieser Art werden in den Patentschriften US-A-4 710 542 und EP-B-0 245 700 sowie in dem Artikel von B. Singh und Mitarbeiter "Carbamylmethylated Melamines, Novel Crosslinkers forthe Coatings Industry" in Advanced Organic Coatings Science and Technology Series, 1991, Band 13, Seiten 193 bis 207, beschrieben.

Besonders bevorzugte Komponenten (D) sind sind Epoxyharze, welche bevorzugt mit sich selbst unter der Katalyse der Komponente (B) reagieren, besonders bevorzugt aliphatische Epoxyharze, welche eine hohe Witterungsstabilität aufweisen. Solche Epoxyharze sind beispielsweise in der Monographie von B.Ellis "Chemistry and Technology of Epoxy Resins" (Blackle Academic & Professional, 1993, Seiten 1 bis 35) beschrieben.

In der Regel werden die Komponenten (D) in Anteilen von bis zu 40 Ges.-%, bevorzugt von bis zu 30 Ges.-%, besonders bevorzugt von bis zu 25 Gew.-%, bezogen auf die nichtflüchtigen Bestandteile des Beschichtungsmittels, eingesetzt. Bei der Auswahl der Komponenten (D) ist zu beachten, daß bei der Härtung der Beschichtungsmittel nicht oder in nur sehr geringem Umfang hydrolyselabile Si-N-C- und/oder Si-O-C-Netzpunkte gebildet werden.

Darüber hinaus kann das im erfindungsgemäßen Verfahren eingesetzte Beschichtungsmittel mindestens ein übliches und bekanntes Lackadditiv in wirksamen Mengen, d.h. in Mengen vorzugsweise bis zu 30 Gew.%, besonders bevorzugt bis zu 25 Gew.-% und insbesondere bis zu 20 Ges.-%, jeweils bezogen auf die nichtflüchtigen Bestandteile des Beschichtungsmittels, enthalten.

Beispiele geeigneter Lackadditive sind:

- insbesondere UV-Absorber;
- insbesondere Lichtschutzmittel wie HALS-Verbindungen, Benztriazole oder Oxalanilide;
- Radikalfänger.
- Slipadditive;
- Polymerisationsinhibitoren;
- Entschäumer,
- Reaktivverdünner, wie sie aus dem Stand der Technik allgemein bekannt sind, welche bevorzugt nicht mit den -Si(OR')3-Gruppen der Komponente (A) unter der Ausbildung von -Si-O-C- und/oder
- Si-N-C-Netzpunkten reagieren.
- Netzmittel wie Siloxane, fluorhaltige Verbindungen, Carbonsäurehalbester, Phosphorsäureester, Polyacrylsäuren und deren Copolymere oder Polyurethane;
- Haftvermittler wie Tricyclodecandimethanol;
- Verlaufmittel;
- filmbildende Hilfsmittel wie Cellulose-Derivate;
- von der Komponente (B) verschiedene Füllstoffe wie beispielsweise Nanopartikel auf der Basis von Siliziumdioxid, Aluminiumoxid oder Zirkoniumoxid; ergänzend wird noch auf das Römpp Lexikon »Lacke und Druckfarben« Georg Thieme Verlag, Stuttgart, 1998, Seiten 250 bis 252, verwiesen;
- Rheologiesteuemder Additive wie die aus den Patentschriften WO 94/22968, EP-A-0 276 501, EP-A-0 249 201 oder WO 97/12945 bekannten; vernetzte polymere Mikroteilchen, wie sie beispielsweise in der EP-A-0 008 127 offenbart sind; anorganische Schichtsilikate wie Aluminium-Magnesium-Silikate, Natrium-Magnesium- und Natrium-Magnesium-Fluor-Lithium-Schichtsilikate des Montmorillonit-Typs; Kieselsäuren wie Aerosile; oder synthetische Polymere mit ionischen und/oder assoziativ wirkenden Gruppen wie Polyvinylalkohol, Poly(meth)acrylamid, Poly(meth)acryisäure, Polyvinylpyrrolidon, Styrol-Maleinsäureanhydrid- oder Ethylen-Maleinsäure-anhydrid-Copolymere und ihre Derivate oder hydrophob modifizierte ethoxylierte Urethane oder Polyacrylate;
- und /oder Flannmschutzmittel.

In einer weiteren Ausführungsform der Erfindung kann das im erfindungsgemäßen Verfahren eingesetzte Beschichtungsmittel noch weitere Pigmente und/oder Füllstoffe enthalten und zur Herstellung pigmentierter Topcoats dienen. Die dafür eingesetzten Pigmente und/oder Füllstoffe sind dem Fachmann bekannt.

Da die nach dem erfindungsgemäßen Beschichtungs Verfahren hergestellten Beschichtungen auch auf bereits ausgehärteten Elektrotauchlackierungen, Füllerlackierungen, Basislackierungen oder üblichen und bekannten Klarlackierungen hervorragend haften, eignen sie sich neben dem Einsatz in der Automobilserien(OEM)lackierung ausgezeichnet für die Autoreparaturlackierung oder die Kratzfestausrüstung von exponierten Stellen von lackierten Automobilkarosserien. Die Applikation der Beschichtungsmittel kann im erfindungsgemäßen Verfahren durch alle üblichen Applikationsmethoden, wie z.B. Spritzen, Rakeln, Streichen, Gießen, Tauchen, Tränken, Träufeln oder Walzen erfolgen. Dabei kann das zu beschichtende Substrat als solches ruhen, wobei die Applikationseinrichtung oder -anlage bewegt wird. Indes kann auch das zu beschichtende Substrat, insbesondere ein Coil, bewegt werden, wobei die Applikationsanlage relativ zum Substrat ruht oder in geeigneter Weise bewegt wird.

Vorzugsweise werden Spritzapplikationsmethoden angewandt, wie zum Beispiel Druckluftspritzen, Ainess-Spritzen. Hochrotation, elektrostatischer Spühauftrag (ESTA), gegebenenfalls verbunden mit Heißspritzapplikation wie zum Beispiel Hot-Air-Heißspritzen. Die Aushärtung der applizierten Beschichtungsmittel kann nach einer gewissen Ruhezeit erfolgen. Die Ruhezeit dient beispielsweise zum Verlauf und zur Entgasung der Lackschichten oder zum Verdunsten von flüchtigen Bestandteilen wie Lösemittel. Die Ruhezeit kann durch die Anwendung erhöhter Temperaturen und/oder durch eine reduzierte Luftfeuchte unterstützt und/oder verkürzt werden, sofern hierbei keine Schädigungen oder Veränderungen der Lackschichten eintreten, etwa eine vorzeitige vollständige Vernetzung.

Die thermische Härtung der Beschichtungsmittel weist keine methodischen Besonderheiten auf, sondern erfolgt nach den üblichen und bekannten Methoden wie Erhitzen in einem Umluftofen oder Bestrahlen mit IR-Lampen. Hierbei kann die thermische Härtung auch stufenweise erfolgen. Eine weitere bevorzugte Härtungsmethode ist die Härtung mit nahem Infrarot (NIR-Strahlung).

Vorteilhafterweise erfolgt die thermische Härtung bei einer Temperatur von 50 bis 200°C, besonders bevorzugt 60 bis 190°C und insbesondere 80 bis 180°C während einer Zeit von 1 min bis zu 5 h, besonders bevor zugt 2 min bis zu 2 h und insbesondere 3 min bis 90 min.

Das erfindungsgemäß Beschichtungs verfahren liefert neue gehärtete Beschichtungen, insbesondere Lackierungen, speziell Klarlackierungen, Formteile, speziell optische Formteile, und freitragende Folien, die hoch kratzfest und insbesondere chemikalien- und witterungsstabil sind. Insbesondere lassen sich die nach dem erfindungsgemäßen Verfahren hergestellten Beschichtungen und Lackierungen, speziell die Klarlackierungen, auch in Schichtdicken > 40 $\mu$m herstellen, ohne daß Spannungsrisse auftreten.

Die elastischen Eigenschaften der nach dem erfindungsgemäßen Verfahren hergestellten Beschichtung wird durch die Verformung der obersten Lackschicht (Haut) mit einem Nanoindentor, ausgedrückt in den Kategorien "elastisch", "plastisch" und "brüchig", charakterisiert. Die für die Prüfung angewandte Schädigung (Verformung) sollte dabei eine Tiefe von maximal 3$\mu$m, vorzugsweise maximal 1,5$\mu$m aufweisen

Die Merkmale der nach dem erfindungsgemäßen Verfahren hergestellten Beschichtung sind durch folgende Werte gekennzeichnet:

|  | elastisch | plastisch | brüchig |
|---|---|---|---|
| erfindungsgemäß | 86,5% | 3,5% | 10% |
| bevorzugt mindestens | 88% | 3% | 9% |
| besonders bevorzugt mindestens | 89.5% | 2,5% | 8% |
| insbesondere mindestens | 91% | 2% | 7% |

Messgeräte, die zur Bestimmung der Anteile der Verformung geeignet sind liefert z.B. die Firma Surface, Hückelhoven unter dem Markennamen Hysitron TriboIndenter®.

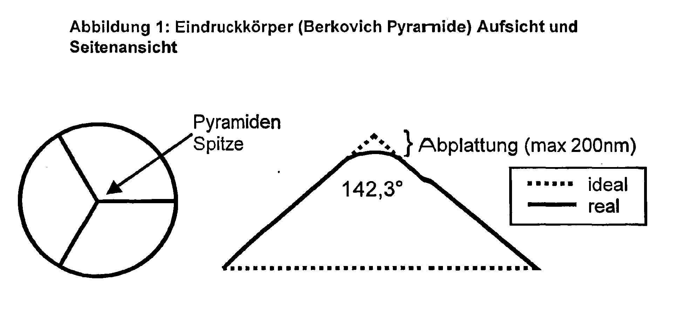

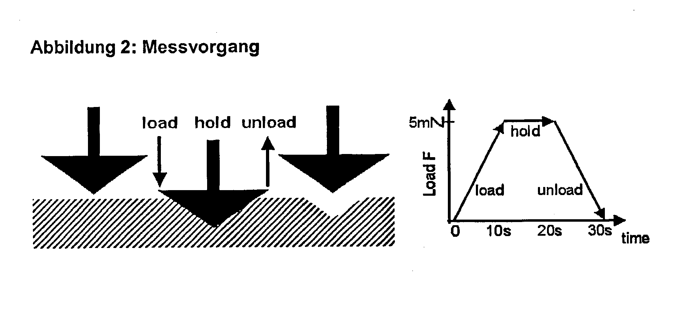

Die Tests werden folgendermaßen durchgeführt: Als Eindruckkörper wird eine dreiseitigen Diamantpyramide in Berkovich Geometrie (Öffnungswi nkel 142,3°) verwendet. Die Abweichung von der ideal spitzen Pyramidenform (Abplattung) darf dabei max. 200 nm betragen (Abbildung 1). Dieser Körper wird nun für 10 s mit linear steigender Kraft bis zu einer Maximalkraft von 5 mN in die Beschichtungsoberfläche gedrückt, verweilt dort weitere 10 s bei maximaler Kraft und wird während der nächsten 10 s mit linear fallender Kraft aus der Oberfläche zurückgezogen (Abbildung 2).

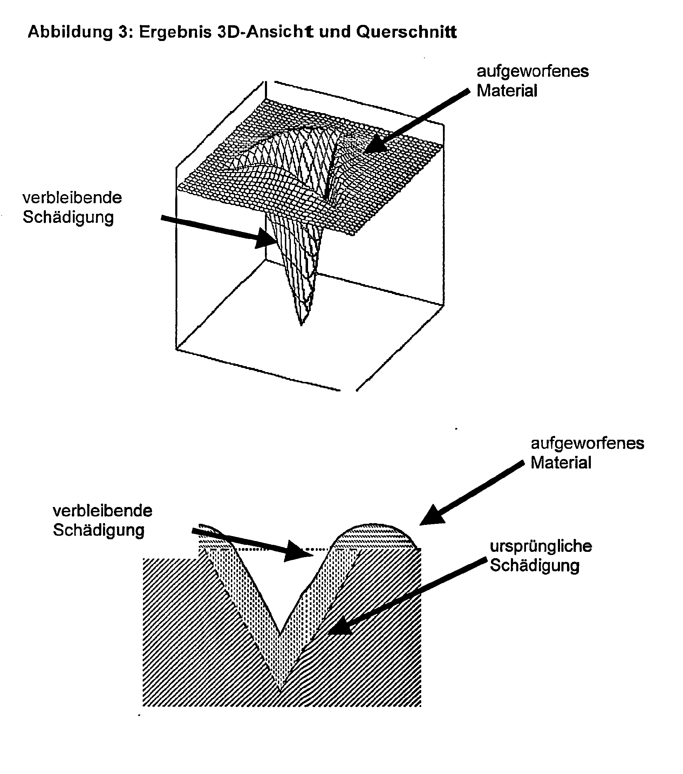

Die Zurückbleibende Schädigung (Abbildung 3) wird 10 min nach der ursprünglichen Schädigung dreidimensional vermessen. Aus den Volumenverhältnissen der ursprünglichen Schädigung, der verbleibenden Schädigung und des aufgeworfenen Materials werden dann die Werte der Kategorien folgendermaßen bestimmt

$$\text{elastisch: } (\text{Volumen}_{\text{ursprünglich}} - \text{Volumen}_{\text{verbleibend}}) / \text{Volumen}_{\text{ursprünglich}} * 100\%$$

$$\text{plastisch: } (\text{Volumen}_{\text{aufgeworfen}}) / \text{Volumen}_{\text{ursprünglich}} * 100\%$$

$$\text{brüchig: } (\text{Volumen}_{\text{verbleibend}} - \text{Volumen}_{\text{aufgeworfen}}) / \text{Volumen}_{\text{ursprünglich}} * 100\%$$

Die nach dem erfindungsgemäßen Verfahren hergestellten Beschichtungen eignen sich hervorragend als dekorative, schützende und/oder effektgebende, hochkratzfeste und hochelastische Beschichtungen und lackierungen von Karosserien von Fortbewegungsmitteln (insbesondere Kraftfahrzeuge, wie Motorräder, Busse, LKW oder PKW) oder von Teilen hiervon; von Bauwerken im Innen- und Außenbereich; von Möbeln, Fenstern und Türen; von Kunst-Kunststoffformteilen, insbesondere CDs und Fenster; von industriellen Kleinteilen, von Coils, Containern und Emballagen; von weißer Ware; von Folien; von optischen, elektrotechnischen und mechanische Bauteilen sowie von Glashohlkörpern und Gegenständen des täglichen Bedarfs.

Insbesondere werden die nach dem erfindungsgemäßen Verfahren hergestellten Beschichtüngen und Lackierungen, insbesondere die Klartackierungen, in dem technologisch und ästhetisch besonders anspruchsvollen Gebiet der Automobilserienlackierung (OEM) eingesetzt. Erfindungsgemäß werden die Beschichtungsmittel in mehrstufigen Beschichtungsverfahren eingesetzt, bei denen auf ein gegebenenfalls vorbeschichtetes Substrat zunächst eine pigmentierte Basislackschicht und danach eine Schicht mit den nach dem erfindungsgemäßen Verfahren einzusetzenden Beschichtungsmittel aufgetragen werden. Solche Verfahren sind beispielsweise in US-A-4,499,150 beschrieben.

Dabei zeichnen sie sich vor allem durch eine besonders hohe Chemikalien- und Witterungsbeständigkeit sowie eine sehr gute Waschstraßenbeständigkeit und Kratzfestigkeit aus, was anhand des für die Praxis relevanten AMTEGWaschstraßentests durch einen Restglanz (20°) nach Reinigung nach DIN 67530 > 70%, bevorzugt > 80% des Ausgangsglanzes belegt wird.

**Beispiele**

**Herstellbeispiel 1- Herstellung eines geeigneten Katalysators (Komponente (B))**

Um eine ausreichende Aushärtung des Klarlackes zu gewährleisten, wurde zunächst ein geeigneter Katalysator hergestellt. Dazu wurden zu 20,43 Gewichtsteile Aluminium-sek.-Butylat in einem Rundkolben bei Raumtemperatur langsam 13,01 Gewichtsteile Ethyla cetoacetat gegeben, wobei gerührt und gekühlt wurde. Anschließend wurde das Reaktionsgemisch noch 1h bei Raumtemperatur weiter gerührt.

**Herstellbeispiel 2-Herstellung eines silanisierten Diisocyanats (HDI mit Bisalkoxysilylamin ) (Komponente (A1))**

In einem Dreihalsglaskolben, ausgestattet mit einem Rückflußkühler und einem Thermometer, werden 30,4 Teile trimerisiertes Hexadiisocynat (HDI) (Basonat HI 100) und 15,2 Teile Solventnaphta vorgelegt. Unter Sückstoffüberschleierung und rühren werden 54,4 Teile Bis-[3-(trimethoxysilyl)propyl]amin (Silquest A 1170) so zudosiert, das 50°C nicht überschritten werden. Nach Ende der Dosierung wird die Reaktionstemperatur bei 50°C gehalten. Die vollständige Blockierung wird mittels der oben beschriebenen Titration festgestellt.

Das so erhaltene blockierte Isocyanat ist bei Raumtemperatur über mehr als einen Monat bei 40°C lagerstabil und konnte nach Zugabe eines Aluminiumkatalysators als 2 K Klarlack appliziert werden.

**Formulierung von kratzfesten und chemikalienbeständigen Beschichtungsmaterialien**

Zur Formulierung von hochkratzfesten und chemikalienbeständigen Beschichtungsmittel wurden 90 Gew.-% des unter Herstellbeispiel 2 beschriebenen Diisocyanat-Addukts (A1) mit 10 Gew.% des unter Her stellbeispiel 1 beschriebenen Katalysators (B) versetzt. Die resultierenden Beschichtungsmittel wurden appliziert und bei 140°C über 22 Minuten eingebrannt. Die Kratzfestigkeit der Oberflächen der resultierenden Beschichtung 2 wurde mit Hilfe des Stahlwolletests untersucht Die Chemikalienbeständigkeit wurde mit Hilfe des BART- Tests untersucht. Die zugehörigen Ergebnisse sind in Tabelle 1 zusammengestellt.

**Tabelle 1- Eigenschaften der mit dem Beschichtungsmittel hergestellten Beschichtung**

|  | Beschichtung |
|---|---|
| Charakterisierung mit Nanoindentor |  |
| Elastische Volumenerholung (%) | 95,34 |
| Plastische Verformung (%) | 0,51 |
| Brüchige Verformung (%) | 4,15 |
| Kratztest Stahlwolle nach 10 DH [ Note] | 1 |
| BART-Test [ Note ] |  |
| $H_2SO_4$ 10%- ig | 1 |
| $H_2SO_4$ 36%- ig | 1 |
| HCl 10%- ig | 1 |

EP 1 802 716 B1

(fortgesetzt)

|  | Beschichtung |
|---|---|
| $H_2SO_3$ 6%- ig | 1 |
| NaOH 5%- ig | 1 |
| VE- $H_2O$ | 0 |

Die Charakterisierung mit dem Nanoindentor wurde wie vorstehend beschrieben durchgeführt.

Zur Durchführung des Stahtwolle-Kratztests wurde ein Hammer nach DIN 1041 (Gewicht ohne Stiel: 800 g; Stiellänge: 35 cm) verwendet Die Prüftafeln wurden vor dem Test während 24 Stunden bei Raumtemperatur gelagert. Die flache Hammerseite wurde mit einer Lage Stahtwolle bespannt und mit Tesakrepp an den hochgeschlagenen Seiten befestigt. Der Hammer wurde im rechten Winkel auf die Klarlackierungen aufgesetzt. Das Gewichtsstück des Hammers wurde ohne zu verkannten und ohne zusätzliche Körperkraft in einer Spur über die Oberfläche der Klarlackierung geführt. Bei jeder Prüfung wurden 10 Doppelhübe per Hand ausgeführt. Nach jeder dieser Einzelprüfungen wurde die Stahlwolle ausgetauscht

Nach der Belastung wurden die Prüffläch en mit einem weichen Tuch von den Stahlwolleresten gereinigt. Die Prüfflächen wurden visuell unter Kunstlicht ausgewertet und wie folgt benotet:

| Note | Schädigungsbild |
|---|---|
| 1 | nicht vorhanden |
| 2 | gering |
| 3 | mäßig |
| 4 | mäßig bis mittel |
| 5 | stark |
| 6 | sehr stark |

Die Auswertung erfolgte unmittelbar nach dem Versuchsende.

Der BART (BASF ACID RESISTANCE FEST) diente der Ermittlung der Beständigkeit einer Klarlackierung gegen Säuren, Laugen und Wassertropfen. Dabei wurde die Klarlackierung auf einem Gradientenofen nach der Einbrennung während 30 min bei 40°C einer Temperaturbelastung ausgesetzt Zuvor wurden die Testsubstanzen (Schwefelsäure 10%-ig, 36%-ig; schweflige Säure 6%-ig, Salzsäure 10%-ig, Natronlauge 5%-ig, VE (= voll entsalztes bzw. deionisiertes) Wasser- 1,2,3 bzw. 4 Tropfen) definiert mit einer Dosierpipette aufgebracht Im Anschluss an die Einwirkung der Substanzen wurden diese unter fließendem Wasser entfernt und die Beschädigungen nach 24 h entsprechend einer vorgegebenen Skala visuell beurteilt:

| Benotung | Aussehen |
|---|---|
| 0 | kein Defekt |
| 1 | leichte Markierung |
| 2 | Markierung / Vermattung / keine Erweichung |
| 3 | Markierung / Vermattung / Farbtonveränderung / Erweichung |
| 4 | Risse / beginnende Durchätzung |
| 5 | Klarlack entfernt |

Es wurde jede einzelne Markierung (Spot) ausgewertet und das Ergebnis in Form einer Note für jede Testsubstanz festgehalten.

Desweiteren wurde der AMTEC-Test nach DIN 67530 an der Beschichtung 2 mit folgenden Resultaten durchgeführt (Glanz bei 20° ):

Anfangsglanz: 88

Glanz nach Schädigung:

mit Reinigung: 84, entspricht 95,5% des Anfangsglanzes

Reftow-Zeit (min):        120

Reflow-Temperatur (°C):        80

Glanz bei nach Reflow:

mit Reinigung:        83, entspricht 94,3% des Anfangsglanzes

**Patentansprüche**

1.  Mehrstufiges Beschlchtungsverfahren, **dadurch gekennzeichnet, dass** auf ein gegebenenfalls vorbeschlchtetes Substrat eine pigmentierte Baslslackschlcht und danach eine Schicht aus einem Beschichtungsmittel aufgebracht wird, das enthält

    (A) mindestens 70 Gew.-% bezogen auf den Gehalt an nichtflüchtigen Substanzen im Beschichtungsmittel einer Verbindung (A1'), die ein Adduct aus Polylsocyanat und Alkoxysilan umfasst, wobei (A1') mindestens eine reaktive Gruppe der Formel I enthält:

    $$-NR-C(O)-N-(X-SIR''x(OR')3-x)n(X'-SIR''y(OR')3-y)m(R''')o \qquad (I)$$

    mit
    R = Wasserstoff, Alkyl, Cycloalkyl, Aryl oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl,
    R' = Wasserstoff, Alkyl oder Cycloalkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl,
    X = linearer und/oder verzweigter Alkylen- oder Cycloalkylenrest mit 2 bis 20 Kohlenstoffatomen,
    R'' = Alkyl, Cycloalkyl, Aryl oder Aralkyl, wobei die Kohlenstoffkette durch nicht benachbarte Sauerstoff , Schwefel- oder NRa-Gruppen unterbrochen sein kann,
    X' = linearer und/oder verzweigter Alkylen- oder Cycloalkylenrest mit 2 bis 20 Kohlenstoffatomen,
    R''' = Alkyl, Cycloalkyl, Aryl oder Aralkyl, wobei die Kohlenstoffkette durch nicht benachbarte Sauerstoff , Schwefel- oder NRa-Gruppen unterbrochen sein kann,
    n = 0 bis 2,
    m = 0 bis 2,
    o=0 oder 1,
    m+n+o = 2,
    x = 0 bis 2, sowie
    y=0 bis 2,
    (B) einen Katalysator für die Vernetzung der -Si(OR')3-x-Einheiten, und
    (C) ein aprotisches Lösemittel oder ein Gemisch von aprotlschen Lösemitteln.

2.  Beschlchtungsverfahren nach Anspruch 1, **dadurch gekennzeichnet, dass** das X und/oder X' für Alkylen mit 2 bis 4 Kohlenstoffatomen steht.

3.  Beschichtungsverfahren nach einem der Ansprüche 1 oder 2, **dadurch gekennzeichnet, dass** in Formel 1 m+n = 2 gilt.

4.  Beschlchtungsverfahren nach einem der Ansprüche 1 bis 3, **dadurch gekennzeichnet, dass** der Katalysator (B) aus der Gruppe der Bor-, Aluminium-, Titan- und/oder Zirkon-Chelate, -Alkoholate und/oder -Ester und/oder der aus der Gruppe der Nanopartikel aus Verbindungen der Elemente Aluminium, Silizium, Titan und/ oder Zirkonium ausgewählt Ist.

5.  Beschichtungsverfahren nach einem der Ansprüche 1 bis 4, **dadurch gekennzeichnet, dass** das aprotische Lösemittel (C) einen Wassergehalt von maximal 1 Gew: %, bezogen auf das Lösemittel, aufweist.

6.  Beschichtungsverfahren nach einem der Ansprüche 1 bis 5, **dadurch** gekenntzeichnet, dass Im Beschichtungsmittel neben den Komponenten (A), (B) und (C) bis zu 40 Ges.-%, bezogen auf den Gehalt an nichtflüchtigen Substanzen, eine weitere Komponente (D) enthalten ist, welche mit den SI(OR')3-Gruppen der Komponente, mit sich selbst und/oder mit einem weiteren Reaktionspartner Netzwerkpunkte ausbilden kann.

**Claims**

1. A multistage coating process which comprises applying to a substrate which may have been precoated a pigmented basecoat film and thereafter a film of a coating material which comprises

   (A) at least 70% by weight, based on the amount of nonvolatile substances in the coating material, of a compound (A1') which includes an adduct of polyisocyanate and alkoxysilane, (A1') containing at least one reactive group of the formula I:

   $$-NR-C(O)-N-(X-SiR''_x(OR')_{3-x})_n(X'-SiR'''_y(OR')_{3-y})_m(R''')_o \qquad (I)$$

   where
   R = hydrogen, alkyl, cycloalkyl, aryl or aralkyl, the carbon chain being uninterrupted or interrupted by nonadjacent oxygen, sulfur or NRa groups, with Ra = alkyl, cycloalkyl, aryl or aralkyl,
   R' = hydrogen, alkyl or cycloalkyl, the carbon chain being uninterrupted or interrupted by nonadjacent oxygen, sulfur or NRa groups, where Ra = alkyl, cycloalkyl, aryl or aralkyl,
   X = linear and/or branched alkylene or cycloalkylene radical having 2 to 20 carbon atoms,
   R'' = alkyl, cycloalkyl, aryl or aralkyl, the carbon chain being uninterrupted or interrupted by nonadjacent oxygen, sulfur or NRa groups,
   X' = linear and/or branched alkylene or cycloalkylene radical of 2 to 20 carbon atoms,
   R''' = alkyl, cycloalkyl, aryl or aralkyl, the carbon chain being uninterrupted or interrupted by nonadjacent oxygen, sulfur or NRa groups,
   n = 0 to 2,
   m = 0 to 2,
   o = 0 or 1,
   m + n + o = 2,
   x = 0 to 2, and
   y = 0 to 2,
   (B) a catalyst for the crosslinking of the $-Si(OR')_{3-x}$ units, and
   (C) an aprotic solvent or a mixture of aprotic solvents.

2. The coating process as claimed in claim 1, wherein X and/or X' is alkylene of 2 to 4 carbon atoms.

3. The coating process as claimed in either of claims 1 or 2, wherein m + n = 2 in formula I.

4. The coating process as claimed in any one of claims 1 to 3, wherein the catalyst (B) is selected from the group consisting of boron, aluminum, titanium and/or zirconium chelates, alkoxides and/or esters and/or from the group consisting of nanoparticles of compounds of the elements aluminum, silicon, titanium and/or zirconium.

5. The coating process as claimed in any one of claims 1 to 4, wherein the aprotic solvent (C) has a water content of not more than 1% by weight, based on the solvent.

6. The coating process as claimed in any one of claims 1 to 5, wherein the coating material comprises further to components (A), (B) and (C) up to 40% by weight, based on the amount of nonvolatile substances, of a further component (D) which is able to form network nodes with the $Si(OR')_3$ groups of the component, with itself and/or with a further reactant.

**Revendications**

1. Procédé de revêtement à plusieurs étapes, **caractérisé en ce qu'**on applique, sur un substrat le cas échéant revêtu au préalable, une couche de laque de base pigmentée puis une couche d'un agent de revêtement, qui contient

   (A) au moins 70% en poids, par rapport à la teneur en substances non volatiles dans l'agent de revêtement, d'un composé (A1'), qui comprend un produit d'addition de polyisocyanate et d'alcoxysilane, où (A1') contient au moins un groupe réactif de formule I :

$$-NR\text{-}C(O)\text{-}N\text{-}(X\text{-}SIR''_x(OR')_{3-x})_n(X'\text{-}SIR''y(OR')_{3-y})_m(R''')_o \qquad (I)$$

avec

R = hydrogène, alkyle, cycloalkyle, aryle ou aralkyle, où la chaîne carbonée peut être interrompue par des groupes oxygène, soufre ou NRa non adjacents, avec Ra = alkyle, cycloalkyle, aryle ou aralkyle,

R' = hydrogène, alkyle ou cycloalkyle, où la chaîne carbonée peut être interrompue par des groupes oxygène, soufre ou NRa non adjacents, avec Ra = alkyle, cycloalkyle, aryle ou aralkyle,

X = un radical alkylène linéaire et/ou ramifié ou cycloalkylène, comprenant 2 à 20 atomes de carbone,

R'' = alkyle, cycloalkyle, aryle ou aralkyle, où la chaîne carbonée peut être interrompue par des groupes oxygène, soufre ou NRa non adjacents,

X' = un radical alkylène linéaire et/ou ramifié ou cycloalkylène, comprenant 2 à 20 atomes de carbone,

R''' = alkyle, cycloalkyle, aryle ou aralkyle, où la chaîne carbonée peut être interrompue par des groupes oxygène, soufre ou NRa non adjacents,

$n = 0$ à $2$,

$m = 0$ à $2$,

$o = 0$ ou $1$,

$m + n + o = 2$,

$x = 0$ à $2$, ainsi que

$y = 0$ à $2$,

(B) un catalyseur pour la réticulation des unités $-Si\,(OR')_{3-x}$, et

(C) un solvant aprotique ou un mélange de solvants aprotiques.

2.  Procédé de revêtement selon la revendication 1, **caractérisé en ce que** X et/ou X' représente(nt) alkylène comprenant 2 à 4 atomes de carbone.

3.  Procédé de revêtement selon l'une quelconque des revendications 1 ou 2, **caractérisé en ce que** dans la formule I, $m + n = 2$.

4.  Procédé de revêtement selon l'une quelconque des revendications 1 ou 3, **caractérisé en ce que** le catalyseur (B) est choisi dans le groupe des chélates, des alcoolates et/ou des esters de bore, d'aluminium, de titane et/ou de zirconium et/ou dans le groupe de nanoparticules de composés des éléments aluminium, silicium, titane et/ou zirconium.

5.  Procédé de revêtement selon l'une quelconque des revendications 1 ou 4, **caractérisé en ce que** le solvant aprotique (C) présente une teneur en eau d'au maximum 1% en poids, par rapport au solvant.

6.  Procédé de revêtement selon l'une quelconque des revendications 1 ou 5, **caractérisé en ce que** l'agent de revêtement contient, outre les composants (A), (B) et (C), jusqu'à 40% en poids, par rapport à la teneur en substances non volatiles, d'un autre composant (D), qui peut former avec les groupes $Si(OR')_3$ du composant, avec lui-même et/ou avec un autre partenaire de réaction, des points de réseau.

**Abbildung 1: Eindruckkörper (Berkovich Pyramide) Aufsicht und Seitenansicht**

Pyramiden Spitze

} Abplattung (max 200nm)

142,3°

······ ideal

—— real

**Abbildung 2: Messvorgang**

**Abbildung 3: Ergebnis 3D-Ansicht und Querschnitt**

aufgeworfenes
Material

verbleibende
Schädigung

aufgeworfenes
Material

verbleibende
Schädigung

ursprüngliche
Schädigung

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4043953 A
- US 4499150 A
- US 4499151 A
- EP 0549643 A
- WO 9220643 A
- EP 0267698 A
- US 4598131 A
- EP 0571073 A
- DE 10237270 A
- US 4772672 A
- US 4710542 A
- EP 0245700 B
- WO 9422968 A
- EP 0276501 A
- EP 0249201 A
- WO 9712945 A
- EP 0008127 A

**In der Beschreibung aufgeführte Nicht-Patentliteratur**

- **B. Singh ; Mitarbeiter.** Carbamylmethylated Melamines, Novel Crosslinkers forthe Coatings Industry. *Advanced Organic Coatings Science and Technology Series,* 1991, vol. 13, 193-207
- **B.Ellis.** Chemistry and Technology of Epoxy Resins. Blackle Academic & Professional, 1993, 1-35
- Lacke und Druckfarben. Georg Thieme Verlag, 1998, 250-252